# DEMANDE DE BREVET EUROPEEN

(11) **EP 4 529 982 A1**
(43) Date de publication de la demande: **02.04.2025**
(21) Numéro de dépôt: 24201808.3
(22) Date de dépôt: 21.09.2024
(51) Int. Cl.: B01L 3/00

(54) **PROCÉDÉ D'ANALYSE D'UN ÉCHANTILLON LIQUIDE DANS UN DISPOSITIF MICROFLUIDIQUE**

(30) Priorité: 27.09.2023 FR 2310266
(71) Demandeur: Commissariat à l'Energie Atomique et aux Energies Alternatives, 75015 Paris (FR)
(72) Inventeur: AUBRET, Mathilde, 38054 GRENOBLE CEDEX 09 (FR); PARENT, Charlotte, 38054 GRENOBLE CEDEX 09 (FR); CUBIZOLLES, Myriam-Laure, 38054 GRENOBLE CEDEX 09 (FR); FOUILLET, Yves, 38054 GRENOBLE CEDEX 09 (FR)
(74) Mandataire: INNOV-GROUP

(57) **Abrégé**

L'invention concerne un Procédé d'analyse d'un échantillon liquide, mis en oeuvre dans un dispositif microfluidique qui comporte plusieurs éléments microfluidiques reliés en série entre eux par des canaux microfluidiques, de l'amont vers l'aval, entre une entrée microfluidique (1) et une sortie microfluidique (2) débouchant sur l'extérieur, Ledit procédé consistant à :
- Isoler une chambre microfluidique (C2) d'analyse en maintenant une vanne microfluidique (V1) d'entrée et une vanne microfluidique (V4) de sortie à l'état fermé lors d'une analyse de l'échantillon liquide dans ladite chambre microfluidique (C2) d'analyse,
- Utiliser une chambre microfluidique (C3) de protection pour piéger les bulles générées par l'actionnement pneumatique d'au moins une vanne microfluidique du dispositif microfluidique.

## Description

### Domaine technique de l'invention

La présente invention se rapporte à un procédé d'analyse d'un échantillon liquide dans un dispositif microfluidique. Le procédé de l'invention permet notamment de gérer la présence des bulles qui peuvent apparaître dans le dispositif lors de l'analyse.

### Etat de la technique

L'analyse d'un échantillon liquide peut être mise en oeuvre en utilisant une cartouche microfluidique, associée à un appareil d'analyse. La cartouche microfluidique intègre un réseau microfluidique composé notamment de capsules microfluidiques et canaux, organisés pour traiter l'échantillon liquide et permettre son analyse directement dans la cartouche microfluidique. Pour cela, les capsules peuvent avoir la fonction de chambres, vannes ou pompes afin de contrôler les écoulements fluidiques.

Les documents EP3541514A1**,** EP3085444A1**,** US2012/064597A1**,** US2013/130262A1**,** US2007/166199A1 et US2006/076068A1 décrivent différents arrangements utilisant de telles capsules microfluidiques.

Une capsule microfluidique comporte une chambre microfluidique dans laquelle débouche au moins un canal d'entrée et dont ressort au moins un canal de sortie. Une membrane est contrôlée pour se déformer dans ladite chambre afin de conférer deux états distincts à la capsule, un premier état dans lequel le canal d'entrée et le canal de sortie communiquent entre eux à travers la chambre de manière à permettre un transfert de fluide par le remplissage de la chambre, et un deuxième état dans lequel la membrane bloque la communication entre les deux canaux, empêchant l'écoulement de fluide et le remplissage de la chambre de la capsule. La commande de la membrane entre ses deux états sera par exemple réalisée à l'aide d'un système d'actionnement pneumatique, par exemple en exerçant une pression positive ou une pression négative sur celle-ci.

L'une des chambres du réseau microfluidique peut être une chambre d'analyse telle que décrite dans la demande de brevet EP3462162A1**.** L'analyse est par exemple une analyse optique. Dans cette demande de brevet, pour mettre en oeuvre une analyse optique fiable, la chambre d'analyse présente une architecture spécifique pour que les bulles éventuellement présentes restent en dehors de la zone de lecture optique. Ces bulles sont notamment générées lors de l'injection de l'échantillon dans la chambre.

Les membranes déformables utilisées au niveau des capsules microfluidiques d'une cartouche microfluidique sont poreuses à l'air, et lors de leur maintien dans un état par effet pneumatique, des bulles d'air peuvent ainsi se propager dans le réseau microfluidique à cause de cette porosité. Le risque d'injection de bulles dans le réseau microfluidique est d'autant plus important que la pression appliquée à la membrane pour la maintenir en position est importante et que la durée de l'application de la pression est longue, ce qui est en particulier le cas pour les vannes du réseau.

Pour des protocoles longs et incluant des incubations en température, le problème de porosité des membranes et donc de création de bulles dans les chambres microfluidiques devient donc critique pour l'analyse.

Les types de protocoles biologiques nécessitant des incubations longues et/ou des températures élevées (supérieures à 30°C) sont nombreux : amplification d'acides nucléiques (chauffage 65° ou 95°C), incubation lors des tests immunologiques, incubation pour les cultures cellulaires...

De même, il est connu que des températures élevées (60°C-90°C) peuvent favoriser la formation de bulles dans un réseau microfluidique.

Lors de la réalisation de ce type de protocoles en cartouche microfluidique, le risque d'injection de bulles dans les zones réactionnelles est important et peut perturber la réaction biologique et altérer l'interprétation des images, et ainsi conduire à des rendus de résultats erronés.

Le but de l'invention est de proposer un procédé permettant d'éviter que les bulles générées à la fois par l'actionnement pneumatique des membranes des capsules microfluidiques (vannes, pompes, chambres...) et les températures élevées lors de la mise en oeuvre des réactions ne viennent perturber l'analyse réalisée dans une chambre microfluidique du réseau.

### Exposé de l'invention

Ce but est atteint par un procédé d'analyse d'un échantillon liquide, mis en oeuvre dans un dispositif microfluidique qui comporte plusieurs éléments microfluidiques reliés en série entre eux par des canaux microfluidiques, de l'amont vers l'aval, entre une entrée microfluidique et une sortie microfluidique débouchant sur l'extérieur, lesdits éléments microfluidiques comportant :
- Une chambre microfluidique, dite d'analyse, recevant ledit échantillon liquide à analyser,
- Une vanne microfluidique d'entrée agencée entre ladite chambre microfluidique d'analyse et l'entrée microfluidique,
- Une vanne microfluidique de sortie agencée entre ladite chambre microfluidique d'analyse et ladite sortie microfluidique,
- Une chambre microfluidique de protection, agencée entre la chambre microfluidique d'analyse et la vanne microfluidique de sortie, et une première vanne microfluidique intermédiaire agencée entre la chambre microfluidique d'analyse et ladite chambre microfluidique de protection,
- Chaque vanne microfluidique étant à actionnement pneumatique et comportant une cavité et une membrane déformable à l'intérieur de la cavité, de manière à conférer deux états distincts à la vanne, un état ouvert dans lequel elle laisse passer un liquide et un état fermé dans lequel elle bloque le passage du liquide,
- Ledit procédé consistant à :
- Isoler ladite chambre microfluidique d'analyse en maintenant la vanne microfluidique d'entrée et la vanne microfluidique de sortie à l'état fermé lors d'une analyse de l'échantillon liquide dans ladite chambre microfluidique d'analyse,
- Commander ladite première vanne microfluidique intermédiaire à l'état ouvert lors de l'analyse de l'échantillon liquide réalisée dans la chambre microfluidique d'analyse et utiliser la chambre microfluidique de protection pour piéger les bulles générées par l'actionnement pneumatique d'au moins une vanne microfluidique du dispositif microfluidique.

Selon une particularité, chaque chambre microfluidique est apte à prendre deux états, un premier état ouvert dans lequel elle est apte à se remplir de l'échantillon liquide, autorisant un passage de l'échantillon liquide de l'amont vers l'aval, et un état fermé dans lequel elle est vide de l'échantillon liquide et bloque le passage de l'échantillon liquide de l'amont vers l'aval, ledit procédé étant caractérisé en ce qu'il comporte une étape préalable de calibration de l'échantillon liquide, comportant des étapes de :
- Injection de l'échantillon liquide par l'entrée microfluidique à l'intérieur d'une chambre microfluidique dite de calibration par ouverture de la vanne microfluidique d'entrée et fermeture d'une deuxième vanne microfluidique intermédiaire agencée entre la chambre microfluidique de calibration et la chambre microfluidique d'analyse.

Selon une autre particularité, le procédé comporte une étape de déplacement de l'échantillon liquide de la chambre microfluidique de calibration vers la chambre microfluidique d'analyse par pompage de l'échantillon liquide, en passant la deuxième vanne microfluidique intermédiaire, la chambre microfluidique d'analyse, la première vanne microfluidique intermédiaire et la chambre microfluidique de protection, chaque chambre et vanne passant de l'état fermé à l'état ouvert.

Selon une autre particularité, le procédé comporte une étape de vidange de la chambre microfluidique de calibration, mise en oeuvre en commandant d'abord la deuxième vanne microfluidique intermédiaire à l'état fermé, puis en commandant la chambre microfluidique de calibration pour la vider en passant la vanne microfluidique d'entrée à l'état ouvert.

Selon une autre particularité, le procédé comporte une étape de réalisation d'une barrière chimique lors de l'analyse de l'échantillon liquide dans la chambre microfluidique d'analyse en plaçant un composé barrière chimique au niveau de l'entrée microfluidique. Selon une autre particularité, le composé barrière chimique est employé pour nettoyer la chambre microfluidique de calibration, la chambre microfluidique d'analyse et la chambre microfluidique de protection.

L'invention concerne également un dispositif microfluidique, le dispositif comportant :
- Une entrée microfluidique et une sortie microfluidique et au moins un module microfluidique connecté entre l'entrée microfluidique (1) et la sortie microfluidique,
- Ledit au moins un module microfluidique comportant :
   ∘ Une chambre microfluidique, dite d'analyse recevant ledit échantillon liquide à analyser,
   ∘ Une vanne microfluidique d'entrée agencée entre ladite chambre microfluidique d'analyse et l'entrée microfluidique,
   ∘ Une vanne microfluidique de sortie agencée entre ladite chambre microfluidique d'analyse et ladite sortie microfluidique,
   ∘ Une chambre microfluidique de protection, agencée entre la chambre microfluidique d'analyse et la vanne microfluidique de sortie, et une première vanne microfluidique intermédiaire agencée entre la chambre microfluidique d'analyse et ladite chambre microfluidique de protection,
- Chaque vanne microfluidique étant à actionnement pneumatique et comportant une cavité et une membrane déformable à l'intérieur de la cavité, de manière à conférer deux états distincts à la vanne, un état ouvert dans lequel elle laisse passer un liquide et un état fermé dans lequel elle bloque le passage du liquide,
- Un système d'actionnement pneumatique apte à exercer une pression positive ou négative pour commander chaque vanne microfluidique dans son état ouvert ou son état fermé,
- Une unité de traitement et de commande configurée pour commander le système d'actionnement pneumatique selon une séquence comportant les étapes du procédé d'analyse tel que défini ci-dessus.

Selon une particularité, chaque chambre microfluidique comporte une membrane déformable déplaçable entre deux positions par commande pneumatique, de manière à conférer deux états distincts à la chambre microfluidique, un premier état ouvert dans lequel elle est apte à se remplir de l'échantillon liquide, autorisant un passage de l'échantillon liquide de l'amont vers l'aval, et un état fermé dans lequel elle est vide de l'échantillon liquide et bloque le passage de l'échantillon liquide de l'amont vers l'aval.

Selon une autre particularité, la chambre microfluidique d'analyse est divisée en plusieurs chambres reliées entre elles, sans vanne microfluidique intermédiaire.

Selon une autre particularité, le dispositif comporte plusieurs modules microfluidiques en parallèle connectés entre l'entrée microfluidique et la sortie microfluidique.

Selon une autre particularité, la chambre microfluidique d'analyse comporte au moins une paroi transparente.

### Brève description des figures

D'autres caractéristiques et avantages vont apparaître dans la description détaillée qui suit, faite en liaison avec les figures annexées listées ci-dessous :
- La figure 1 représente l'architecture du dispositif microfluidique utilisé pour mettre en oeuvre le procédé d'analyse conforme à l'invention ;
- Les figures 2A et 2B montrent un exemple de réalisation d'une vanne microfluidique employée dans le dispositif microfluidique et illustre son principe de fonctionnement ;
- Les figures 3A et 3B montrent un exemple de réalisation d'une chambre microfluidique à double cavité pouvant être employée dans le dispositif microfluidique et illustre son principe de fonctionnement ;

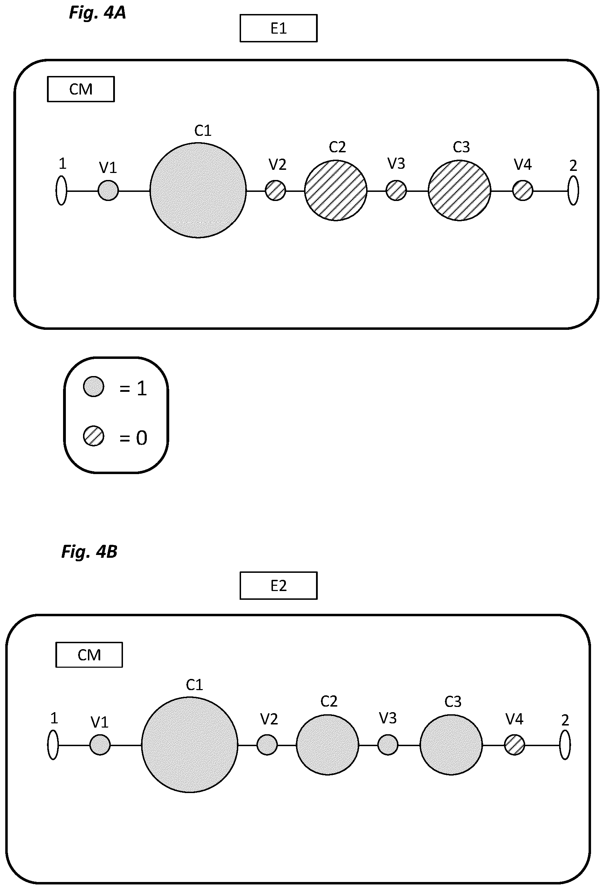

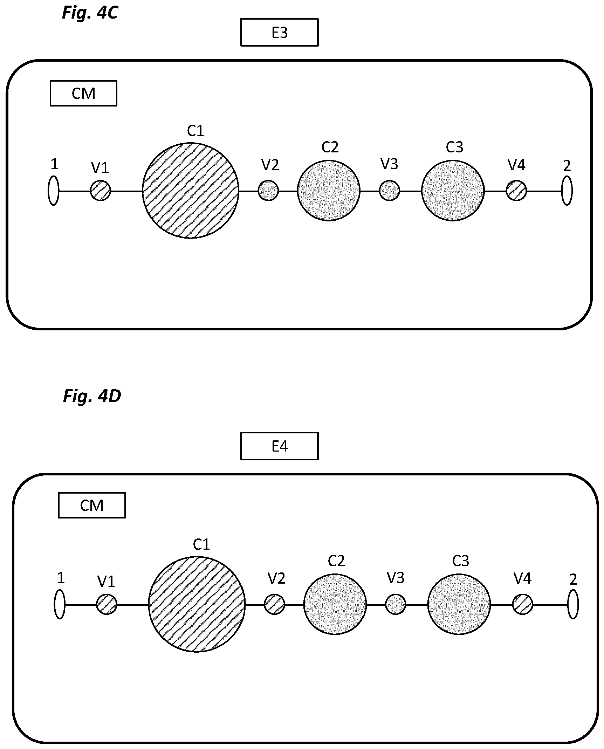

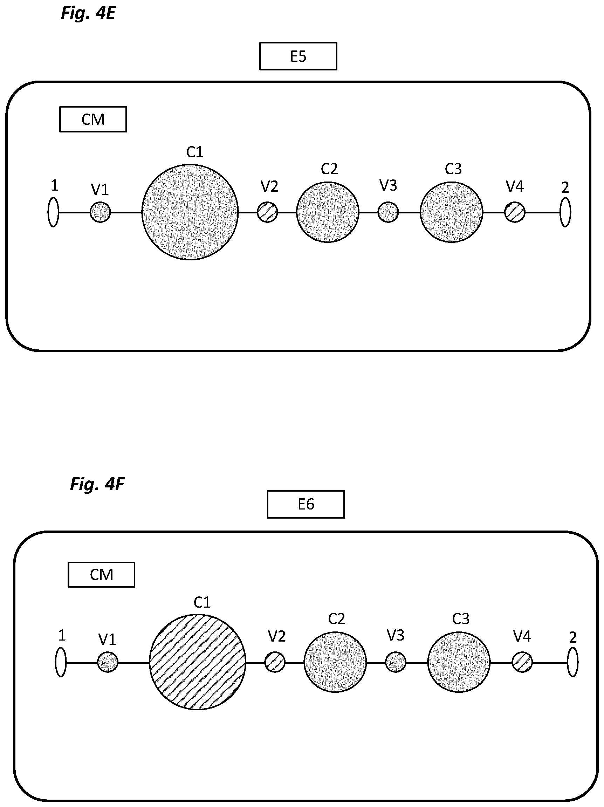

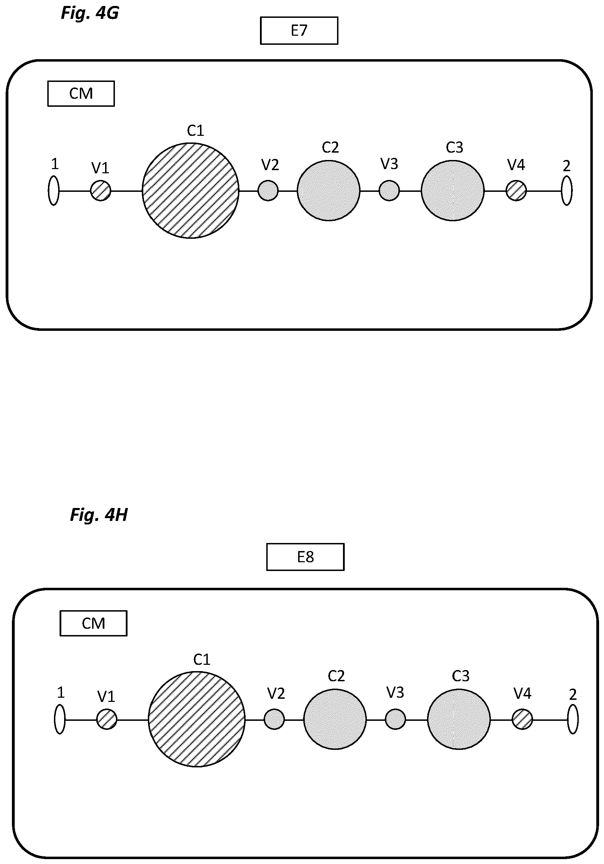

- Les figures 4A à 4H détaillent les étapes de mise en oeuvre du procédé d'analyse conforme à l'invention ;
- Les figures 5A et 5B montrent deux variantes de réalisation du dispositif microfluidique, dans lequel le procédé d'analyse de l'invention peut être mis en oeuvre ;
- La figure 6 montre quatre modules de deux chambres microfluidiques d'analyse et de protection mis en parallèle, lors d'une réaction d'amplification ;
- La figure 7 illustre un principe de perfectionnement du procédé d'analyse de l'invention ;

### Description détaillée d'au moins un mode de réalisation

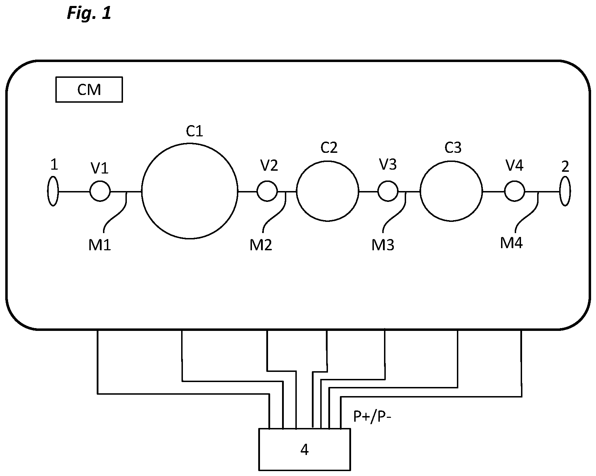

En référence à la figure 1, un dispositif microfluidique adapté pour mettre en oeuvre le procédé de l'invention est avantageusement réalisé dans une unique cartouche microfluidique CM.

Une cartouche microfluidique CM est notamment employée dans le domaine médical pour analyser un fluide, tel qu'un échantillon liquide (du sang par exemple) en venant se connecter sur un automate d'analyse. La cartouche peut ainsi intégrer tout un réseau microfluidique composé de capsules microfluidiques tels que des vannes, des chambres et des canaux microfluidiques.

Une cartouche microfluidique CM est souvent réalisée par l'assemblage de plusieurs couches entre elles. Ses couches sont par exemple assemblées entre elles par scellement thermique. Chaque couche peut être usinée de manière à y créer une partie du réseau microfluidique de la cartouche.

Une telle cartouche CM présente par exemple une épaisseur comprise entre 2mm et 12mm.

La cartouche microfluidique CM est associée à un système d'actionnement pneumatique 4, capable d'appliquer une pression positive P+ ou une pression négative P- sur chaque capsule microfluidique apte à être commandée (vannes microfluidiques et chambres microfluidiques notamment). Le système d'actionnement pneumatique 4 est commandé par une unité de traitement et de commande, configurée pour exécuter une séquence comportant les étapes du procédé d'analyse de l'invention. Ainsi, lorsqu'une vanne microfluidique ou une chambre microfluidique est commandée dans un état ouvert ou fermé, le système d'actionnement pneumatique applique la pression voulue (positive ou négative) sur commande de l'unité de traitement et de commande.

### Cartouche microfluidique

### Figure 1

Dans le cadre de l'invention, le réseau microfluidique de la cartouche microfluidique CM comporte :
- Une entrée microfluidique 1 par laquelle l'échantillon liquide est injecté dans le réseau microfluidique ; L'entrée microfluidique 1 peut être de tous types pour injecter un volume de fluide suffisant pour remplir une première chambre microfluidique C1 de calibration : Il peut par exemple s'agir d'une injection directe de type "Luer" ou une connexion à un réseau microfluidique présent en amont sur la même cartouche, sur une autre cartouche ou sur tout autre système microfluidique ou millifluidique.
- Une première chambre microfluidique C1 dite de calibration de l'échantillon liquide ;
- Une deuxième chambre microfluidique C2 dite d'analyse de l'échantillon liquide ;
- Une troisième chambre microfluidique C3 dite de protection, utilisée pour le piégeage des bulles ;
- Une sortie microfluidique 2 par laquelle l'échantillon liquide peut être évacué de la cartouche microfluidique ; Comme l'entrée microfluidique, la sortie microfluidique peut être de tous types et n'est pas à comprendre de manière limitative.

Ces chambres microfluidiques sont reliées en série, de sorte que :
- L'entrée microfluidique est reliée à la chambre microfluidique C1 de calibration par un premier canal microfluidique M1 ;
- La chambre microfluidique C1 de calibration est reliée à la chambre microfluidique C2 d'analyse par un deuxième canal microfluidique M2 ;
- La chambre microfluidique C2 d'analyse est reliée à la chambre microfluidique C3 de protection par un troisième canal microfluidique M3 ;
- La chambre microfluidique C3 de protection est reliée à la sortie microfluidique par un quatrième canal microfluidique M4 ;

Par "reliés en série", on entend que l'échantillon liquide est capable de passer d'une chambre à l'autre via le canal microfluidique reliant les deux chambres.

Par ailleurs, le réseau microfluidique comporte également :
- Une première vanne microfluidique V1 positionnée sur le premier canal microfluidique M1, entre l'entrée microfluidique 1 et la chambre microfluidique C1 de calibration ;
- Une deuxième vanne microfluidique V2 positionnée sur le deuxième canal microfluidique M2, entre la chambre microfluidique C1 de calibration et la chambre microfluidique C2 d'analyse ;
- Une troisième vanne microfluidique V3 positionnée sur le troisième canal microfluidique M3, entre la chambre microfluidique C2 d'analyse et la chambre microfluidique C3 de protection ;
- Une quatrième vanne microfluidique V4 positionnée sur le quatrième canal microfluidique M4, entre la chambre microfluidique C3 de protection et la sortie microfluidique 2 ;

### Capsule microfluidique : Vanne microfluidique et chambre microfluidique

Figure 2A
Figure 2B
Figure 3A
Figure 3B

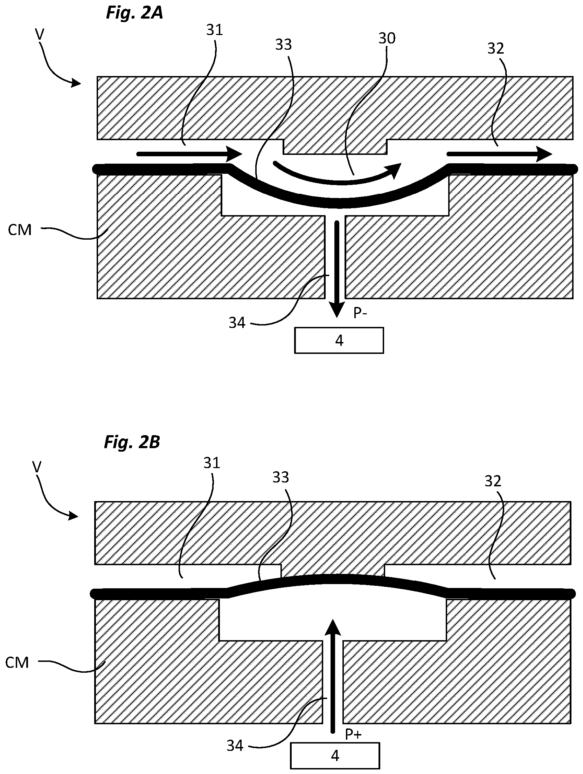

Les figures 2A et 2B donnent un exemple de réalisation d'une capsule microfluidique de type vanne microfluidique, pouvant être employée dans la cartouche microfluidique CM. Une telle vanne microfluidique V comporte une chambre 30 ou cavité fluidique dans laquelle débouche un canal d'entrée 31 et dont ressort un canal de sortie 32. Une membrane 33 déformable est commandée entre deux positions pour conférer deux états distincts à la vanne, un premier état dans lequel le canal d'entrée 31 communique avec le canal de sortie 32 via la chambre 30 autorisant un transfert de fluide (figure 2A), et un deuxième état dans lequel la membrane 33 bloque la communication entre les deux canaux, empêchant l'écoulement de fluide et le remplissage de la chambre (figure 2B). La commande de la membrane 33 entre ses deux états est réalisée à l'aide du système d'actionnement pneumatique 4, par exemple en exerçant sur elle une pression positive P+ (pour fermer la vanne, figure 2B) ou une pression négative P- (pour ouvrir la vanne, figure 2A) via un canal d'actionnement 34 spécifique intégré dans la cartouche microfluidique.

Comme indiqué ci-dessus, la cartouche microfluidique peut être réalisée par un assemblage multicouches dans lequel la membrane déformable forme une couche intermédiaire prise entre deux couches. La membrane peut être collée ou fixée par de l'adhésif double-face prédécoupé ou par un traitement plasma.

Actuellement la membrane déformable est souvent réalisée dans un matériau hyperélastique à base de silicone, tel que le polydiméthylsiloxane (PDMS), ou d'élastomère comme l'Ecoflex (marque déposée).

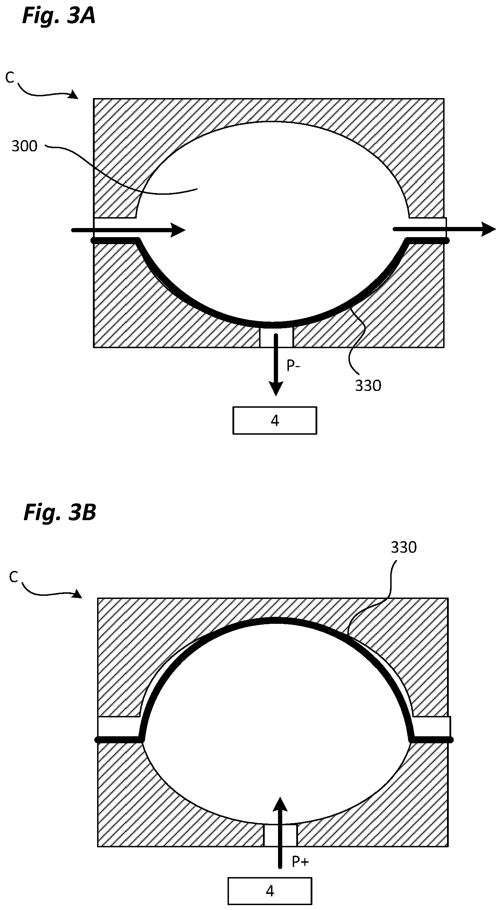

Par ailleurs, les chambres (C1, C2, C3) du réseau microfluidique peuvent être réalisées selon le même principe que celui utilisé pour chaque vanne microfluidique ou en format "double cavité" (figure 3A et figure 3B). Chaque chambre C comporte une cavité 300 dont le volume est modulé par la position de la membrane 330 déformable et la taille de la chambre. La chambre C peut ainsi prendre deux états, un état ouvert (figure 3A) dans lequel la cavité 300 de la chambre peut se remplir de liquide et un état fermé (figure 3B) dans lequel la cavité 300 de la chambre est vide et ne peut se remplir de liquide, bloquée par la membrane. Pour passer de l'état ouvert à l'état fermé la membrane 330 est contrôlée par le système d'actionnement pneumatique 4 entre deux positions, de manière à ouvrir la cavité 300 ou fermer la cavité 300.

### Protocole d'analyse - Première variante de réalisation

### Figures 4A à 4H

L'architecture du réseau microfluidique décrite ci-dessus est particulièrement pertinente pour réaliser un suivi d'amplification d'acides nucléiques, par les méthodes PCR ou isothermes (LAMP, RPA par exemple). Le suivi de telles réactions d'amplification dans des chambres microfluidiques peut être réalisé par imagerie (fluorescence par exemple), c'est-à-dire par analyse optique du signal fluorescent à travers la chambre microfluidique C2 d'analyse, cette dernière pouvant avoir des parois transparentes pour réaliser un suivi optique de la réaction.

Pour réaliser un suivi optique de la réaction en solution dans la chambre microfluidique C2 d'analyse, il est nécessaire que celle-ci ne soit pas encombrée par la présence de bulles.

Comme indiqué ci-dessus, la présence de bulles est parfois occasionnée par le maintien d'une vanne microfluidique V dans un état donné par l'exercice d'une pression via le système d'actionnement pneumatique 4. L'air sous pression appliqué sur la membrane par le système d'actionnement pneumatique 4 peut en effet traverser ladite paroi du fait de la porosité de cette dernière et se retrouver piégé dans la chambre microfluidique sous forme de bulles.

Des bulles peuvent également apparaître lors de réaction se déroulant à des températures élevées, ou lors du processus de remplissage.

Un premier exemple d'un protocole d'analyse d'un échantillon liquide est décrit ci-dessous en liaison avec le tableau suivant :

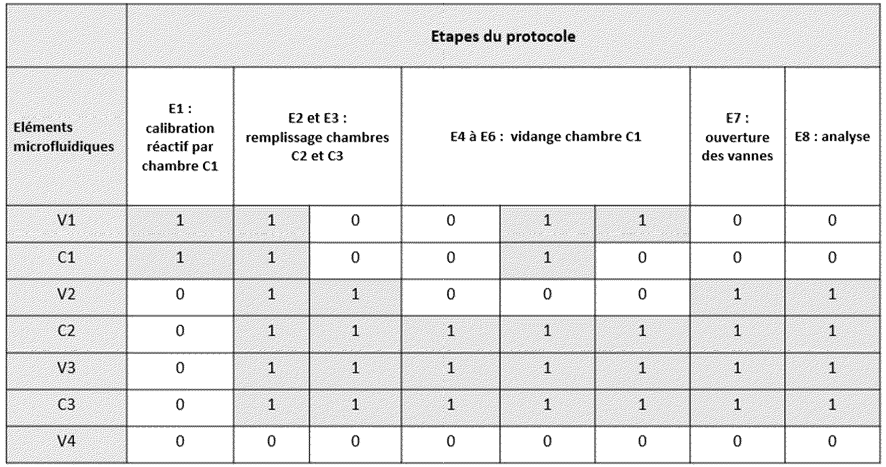

Dans ce tableau, pour une vanne :
- L'état 1 correspond à l'état dans lequel la vanne est à l'état ouvert et accepte le passage du liquide ;
- L'état 0 correspond à l'état dans lequel la vanne est à l'état fermé et bloque le passage du liquide ;

Et pour une chambre :
- L'état 1 correspond à l'état dans lequel la chambre est à l'état ouvert et peut se remplir de liquide ;
- L'état 0 correspond à l'état dans lequel la chambre est à l'état fermé et ne peut se remplir de liquide ;

### Etape E1 : Calibration réactif

### Figure 4A

Dans cette étape E1, la vanne V1 et la chambre microfluidique C1 de calibration sont à l'état ouvert, permettant l'injection de l'échantillon liquide dans cette chambre C1. Tous les autres éléments fluidiques situés en aval (de V2 jusqu'à V4) sont à l'état fermé.

Cette étape se poursuit jusqu'au remplissage complet de la chambre microfluidique C1 de calibration.

### Etapes E2 et E3 : Remplissage de la chambre microfluidique C2 d'analyse et de la chambre microfluidique C3 de protection.

### Figure 4B

### Figure 4C

A l'étape E2, les vannes V2 et V3 sont commandées à l'état ouvert, ainsi que la chambre microfluidique C2 d'analyse et la chambre microfluidique C3 de protection. La vanne V4 reste à l'état fermé pour éviter toute perte d'échantillon.

En commandant les vannes V2, V3 et les chambres C2, C3 à l'état ouvert, l'échantillon liquide est pompé en dehors de la chambre microfluidique C1 de calibration en direction des chambres microfluidiques C2, C3.

Il faut noter que le volume V_C1 de la chambre microfluidique C1 de calibration est avantageusement supérieur à V_V2+V_C2+V_V3+V_C3 + Volumes morts des canaux reliant ces différents éléments microfluidiques. Ainsi, on obtient un remplissage complet des éléments microfluidiques situés en aval de la chambre microfluidique C1 de calibration.

Avec :
V_V2 correspondant au volume de la deuxième vanne microfluidique V2 ;
V_V3 correspondant au volume de la troisième vanne microfluidique V3 ;
V_C2 correspondant au volume de la chambre microfluidique C2 d'analyse ;
V_C3 correspondant au volume de la chambre microfluidique C3 de protection ;

A l'étape E3, la vanne V1 et la chambre microfluidique C1 de calibration sont repassés successivement à l'état fermé pour éviter toute fuite de l'échantillon via l'entrée microfluidique 1.

### Etapes E4, E5 et E6 : Vidange de la chambre microfluidique C1 de calibration

### Figure 4D

### Figure 4E

### Figure 4F

A l'étape E4, la vanne V2 est commandée à l'état fermé pour être vidée vers la chambre microfluidique C2 d'analyse et isoler les chambres microfluidiques C2, C3.

A l'étape E5, la chambre microfluidique C1 de calibration et la vanne V1 sont commandées à l'état ouvert, pour pomper le surplus de liquide encore présent entre la chambre microfluidique C1 de calibration et la vanne V2. La vanne V2 est maintenue à l'état fermé.

A l'étape E6, la chambre microfluidique C1 de calibration est commandée à l'état fermé pour pousser le liquide vers la vanne V1. La vanne V1 est maintenue à l'état ouvert, ce qui permet alors de vider le liquide vers l'extérieur via l'entrée microfluidique.

### Etape E7 : Ouverture vanne V2

### Figure 4G

A l'étape E7, la vanne V2 est commandée à l'état ouvert (application d'une pression négative). On évite ainsi l'injection de bulles dans la chambre microfluidique C2 d'analyse, pouvant être occasionnée par le maintien de la vanne V2 à l'état fermé par l'exercice d'une pression positive. L'étanchéité est alors assurée par le maintien de la chambre microfluidique C1 de calibration à l'état fermé, ainsi que de la vanne V1 maintenue à l'état fermé.

### Etape E8 : Analyse dans la chambre microfluidique C2 d'analyse

### Figure 4H

La chambre microfluidique C2 d'analyse est utilisée pour l'analyse de l'échantillon selon l'une des méthodes connues décrites ci-dessus, telles que par exemple un suivi d'amplification d'acides nucléiques, par les méthodes PCR ou isothermes (LAMP, RPA par exemple), via l'évolution de la fluorescence dans la solution au cours du temps. Pendant la mise en oeuvre de cette méthode, la vanne V1, la chambre microfluidique C1 de calibration et la vanne V4 sont maintenus à l'état fermé, en vue d'isoler les deux chambres microfluidiques C2, C3.

### Protocole d'analyse -variantes de réalisation

### Figure 5A

### Figure 5B

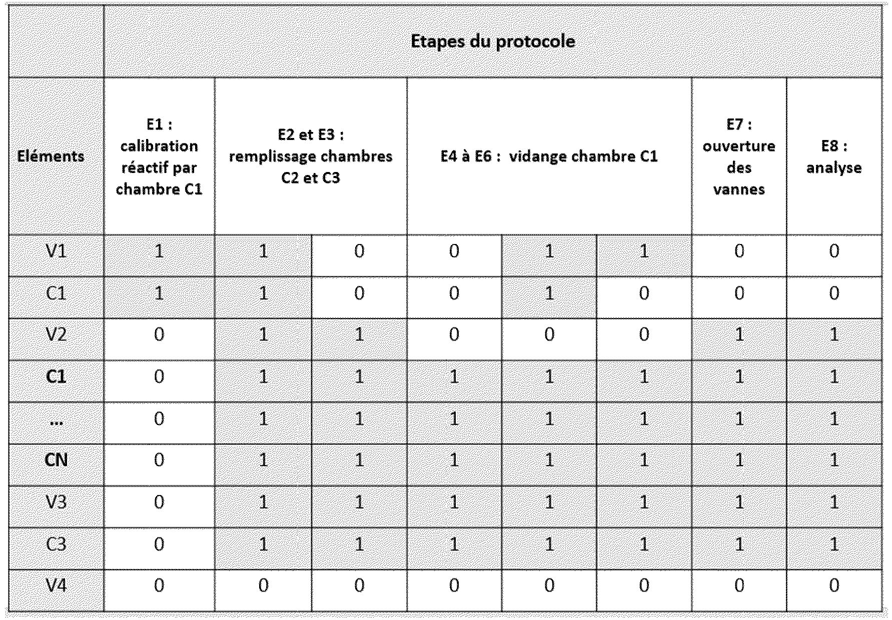

Dans cette variante de réalisation, la chambre microfluidique C2 d'analyse est divisée en N chambres successives (N supérieur ou égal à 1 et notées C2_1, C2_2, C2_N) reliées en série, sans vanne intermédiaire, afin de limiter l'apparition de bulles. Le protocole reste identique à celui décrit ci-dessus.

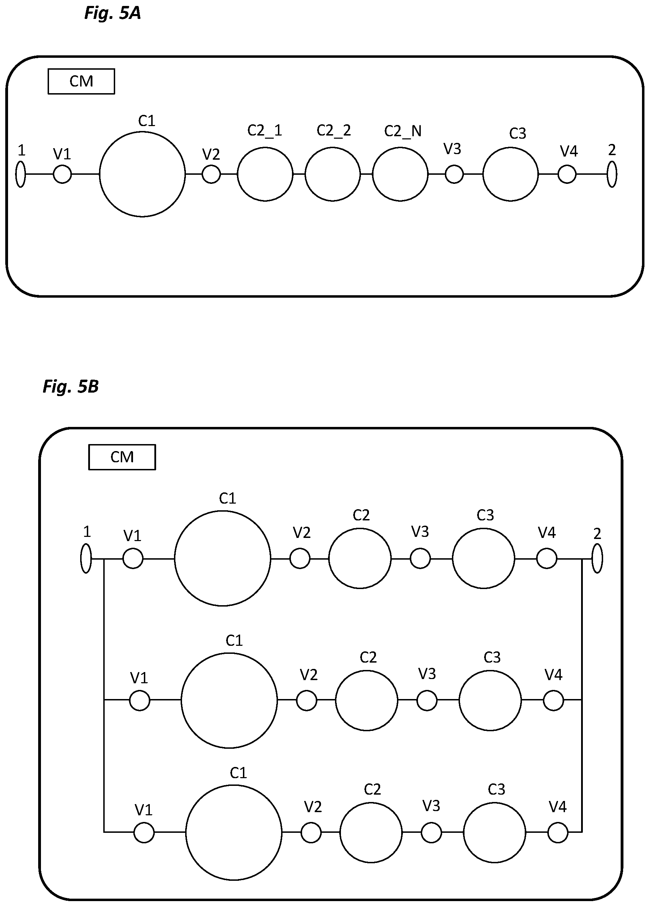

La figure 5A montre la cartouche microfluidique CM ayant cette configuration.

En outre, comme représenté sur la figure 5B, il est également possible de dupliquer des modules microfluidiques en parallèle entre l'entrée microfluidique 1 et la sortie microfluidique 2. Chaque module microfluidique comporte ainsi la série de chambres microfluidiques C1, C2, C3 et de vannes microfluidiques V1, V2, V3, V4 selon les configurations décrites ci-dessus et qui peuvent être contrôlées de manière groupée. Cette configuration permet de faire plusieurs analyses en parallèle sur une même cartouche.

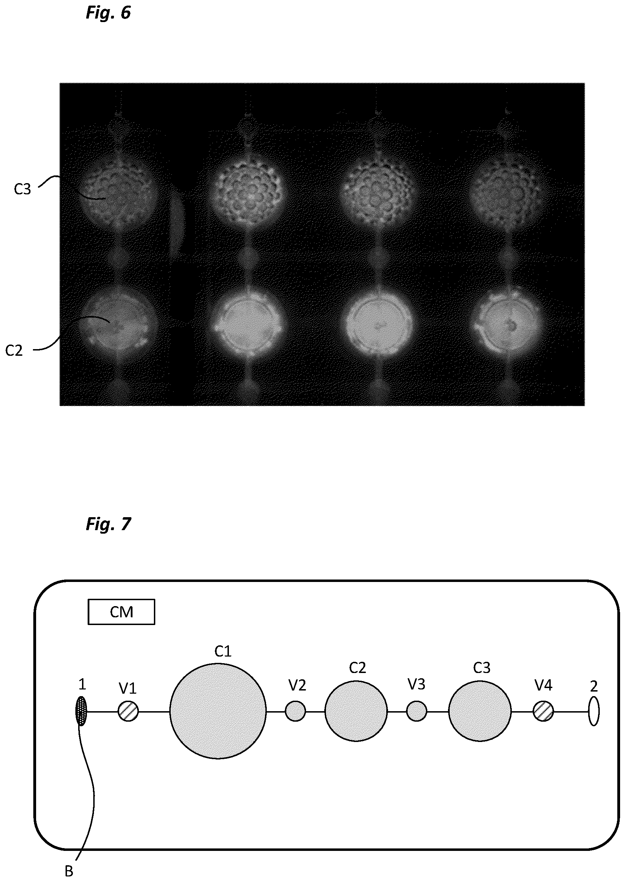

L'invention permet de facilement limiter la présence de bulles dans la chambre microfluidique C2 d'analyse, ce qui évite toute erreur d'interprétation lors de la lecture optique réalisée à travers cette chambre. La figure 6 montre quatre séries de deux chambres microfluidiques C2 et C3. Cette figure permet de constater que les bulles générées lors des protocoles d'analyse (par l'actionnement pneumatique et la présence de températures élevées) migrent naturellement vers la chambre microfluidique C3 de protection disponible située la plus en aval dans le circuit microfluidique. Les bulles sont donc bien piégées dans la rangée de chambres microfluidiques C3 de protection, tandis que la rangée de chambres microfluidiques C2 d'analyse comporte très peu de bulles, ce qui permet de visualiser l'l'évolution de la fluorescence au cours de la réaction, sans signal parasite.

### Protocole d'analyse - Réalisation améliorée

### Figure 7

Par ailleurs, il faut noter que, pendant les réactions d'amplification, il peut s'avérer judicieux de protéger la zone réactionnelle, afin d'éviter que la solution contenant les amplicons ne se disperse dans l'environnement.

Une barrière chimique peut donc être ajoutée au niveau de l'entrée des réactifs, afin d'éviter les contaminations. La barrière chimique B peut être constituée par exemple par du "RNAse away", ou toute autre solution connue de l'homme de l'art pour éliminer durablement des amplicons d'acides nucléiques. Le composé jouant le rôle de barrière chimique est placé dans l'entrée microfluidique 1.

Après la réaction d'amplification, le composé utilisé pour former la barrière chimique peut être employé pour venir nettoyer les chambres C1, C2, C3 de la cartouche microfluidique, permettant ainsi de pouvoir réutiliser la cartouche microfluidique pour une nouvelle analyse. Ce principe peut s'appliquer aux deux variantes de réalisation décrites ci-dessus.

## Revendications

1. Procédé d'analyse d'un échantillon liquide, mis en oeuvre dans un dispositif microfluidique qui comporte plusieurs éléments microfluidiques reliés en série entre eux par des canaux microfluidiques, de l'amont vers l'aval, entre une entrée microfluidique (1) et une sortie microfluidique (2) débouchant sur l'extérieur, lesdits éléments microfluidiques comportant :
- Une chambre microfluidique (C2), dite d'analyse, recevant ledit échantillon liquide à analyser,
- Une vanne microfluidique (V1) d'entrée agencée entre ladite chambre microfluidique (C2) d'analyse et l'entrée microfluidique (1),
- Une vanne microfluidique (V4) de sortie agencée entre ladite chambre microfluidique (C2) d'analyse et ladite sortie microfluidique (2),
- Une chambre microfluidique (C3) de protection, agencée entre la chambre microfluidique (C2) d'analyse et la vanne microfluidique (V4) de sortie, et une première vanne microfluidique (V3) intermédiaire agencée entre la chambre microfluidique (C2) d'analyse et ladite chambre microfluidique (C3) de protection,
- Chaque vanne microfluidique étant à actionnement pneumatique et comportant une cavité et une membrane déformable à l'intérieur de la cavité, de manière à conférer deux états distincts à la vanne, un état ouvert dans lequel elle laisse passer un liquide et un état fermé dans lequel elle bloque le passage du liquide,
- Ledit procédé étant **caractérisé en ce qu'**il consiste à :
- Isoler ladite chambre microfluidique (C2) d'analyse en maintenant la vanne microfluidique (V1) d'entrée et la vanne microfluidique (V4) de sortie à l'état fermé lors d'une analyse de l'échantillon liquide dans ladite chambre microfluidique (C2) d'analyse,
- Commander ladite première vanne microfluidique (V3) intermédiaire à l'état ouvert lors de l'analyse de l'échantillon liquide réalisée dans la chambre microfluidique (C2) d'analyse et utiliser la chambre microfluidique (C3) de protection pour piéger les bulles générées par l'actionnement pneumatique d'au moins une vanne microfluidique du dispositif microfluidique.

2. Procédé selon la revendication 1, **caractérisé en ce que** chaque chambre microfluidique (C1, C2, C3) est apte à prendre deux états, un premier état ouvert dans lequel elle est apte à se remplir de l'échantillon liquide, autorisant un passage de l'échantillon liquide de l'amont vers l'aval, et un état fermé dans lequel elle est vide de l'échantillon liquide et bloque le passage de l'échantillon liquide de l'amont vers l'aval, ledit procédé étant **caractérisé en ce qu'**il comporte une étape préalable de calibration de l'échantillon liquide, comportant des étapes de :
- Injection de l'échantillon liquide par l'entrée microfluidique à l'intérieur d'une chambre microfluidique (C1) dite de calibration par ouverture de la vanne microfluidique (V1) d'entrée et fermeture d'une deuxième vanne microfluidique (V2) intermédiaire agencée entre la chambre microfluidique (C1) de calibration et la chambre microfluidique (C2) d'analyse.

3. Procédé selon la revendication 2, **caractérisé en ce qu'**il comporte une étape de déplacement de l'échantillon liquide de la chambre microfluidique (C1) de calibration vers la chambre microfluidique (C2) d'analyse par pompage de l'échantillon liquide, en passant la deuxième vanne microfluidique (V2) intermédiaire, la chambre microfluidique (C2) d'analyse, la première vanne microfluidique (V3) intermédiaire et la chambre microfluidique (C3) de protection, chaque chambre et vanne passant de l'état fermé à l'état ouvert.

4. Procédé selon la revendication 3, **caractérisé en ce qu'**il comporte une étape de vidange de la chambre microfluidique (C1) de calibration, mise en oeuvre en commandant d'abord la deuxième vanne microfluidique (V2) intermédiaire à l'état fermé, puis en commandant la chambre microfluidique (C1) de calibration pour la vider en passant la vanne microfluidique (V1) d'entrée à l'état ouvert.

5. Procédé selon l'une des revendications 1 à 4, **caractérisé en ce qu'**il comporte une étape de réalisation d'une barrière chimique lors de l'analyse de l'échantillon liquide dans la chambre microfluidique (C2) d'analyse en plaçant un composé barrière chimique (B) au niveau de l'entrée microfluidique (1).

6. Procédé selon la revendication 5, **caractérisé en ce que** le composé barrière chimique (B) est employé pour nettoyer la chambre microfluidique (C1) de calibration, la chambre microfluidique (C2) d'analyse et la chambre microfluidique (C3) de protection.

7. Dispositif microfluidique, **caractérisé en ce qu'**il comporte :
- Une entrée microfluidique (1) et une sortie microfluidique (2) et au moins un module microfluidique connecté entre l'entrée microfluidique (1) et la sortie microfluidique (2),
- Ledit au moins un module microfluidique comportant :
∘ Une chambre microfluidique (C2), dite d'analyse recevant ledit échantillon liquide à analyser,
∘ Une vanne microfluidique (V1) d'entrée agencée entre ladite chambre microfluidique (C2) d'analyse et l'entrée microfluidique (1),
∘ Une vanne microfluidique (V4) de sortie agencée entre ladite chambre microfluidique (C2) d'analyse et ladite sortie microfluidique (2),
∘ Une chambre microfluidique (C3) de protection, agencée entre la chambre microfluidique (C2) d'analyse et la vanne microfluidique (V4) de sortie, et une première vanne microfluidique (V3) intermédiaire agencée entre la chambre microfluidique (C2) d'analyse et ladite chambre microfluidique (C3) de protection,
- Chaque vanne microfluidique étant à actionnement pneumatique et comportant une cavité et une membrane déformable à l'intérieur de la cavité, de manière à conférer deux états distincts à la vanne, un état ouvert dans lequel elle laisse passer un liquide et un état fermé dans lequel elle bloque le passage du liquide,
- Un système d'actionnement pneumatique (4) apte à exercer une pression positive ou négative pour commander chaque vanne microfluidique dans son état ouvert ou son état fermé,
- Une unité de traitement et de commande configurée pour commander le système d'actionnement pneumatique (4) selon une séquence comportant les étapes du procédé d'analyse tel que défini dans l'une des revendications précédentes.

8. Dispositif selon la revendication 7, **caractérisé en ce que** chaque chambre microfluidique (C1, C2, C3) comporte une membrane déformable déplaçable entre deux positions par commande pneumatique, de manière à conférer deux états distincts à la chambre microfluidique, un premier état ouvert dans lequel elle est apte à se remplir de l'échantillon liquide, autorisant un passage de l'échantillon liquide de l'amont vers l'aval, et un état fermé dans lequel elle est vide de l'échantillon liquide et bloque le passage de l'échantillon liquide de l'amont vers l'aval.

9. Dispositif microfluidique selon la revendication 7 ou 8, **caractérisé en ce que** la chambre microfluidique (C2) d'analyse est divisée en plusieurs chambres reliées entre elles, sans vanne microfluidique intermédiaire.

10. Dispositif microfluidique selon l'une des revendications 7 à 9, **caractérisé en ce qu'**il comporte plusieurs modules microfluidiques en parallèle connectés entre l'entrée microfluidique (1) et la sortie microfluidique (2).

11. Dispositif selon l'une des revendications 7 à 10, **caractérisé en ce que** la chambre microfluidique (C2) d'analyse comporte au moins une paroi transparente.
